# EUROPEAN PATENT SPECIFICATION

(11) **EP 3 853 134 B1**
(45) Date of publication and mention of the grant of the patent: **17.09.2025**
(21) Application number: 19877588.4
(22) Date of filing: 31.10.2019
(51) Int. Cl.: B65B 11/02, B65B 35/40, B65B 49/00, B65B 61/00, B65B 41/12, B65B 45/00, B65H 18/08, B29C 63/02, B65B 33/04, B65B 67/08, B65H 16/02, B65H 16/06

(54) **METHOD AND APPARATUS FOR APPLICATION OF POLYMERIC FILM AND LAMINATES TO SURFACES OF ARTICLES**
VERFAHREN UND VORRICHTUNG ZUM AUFBRINGEN VON POLYMERFILM UND LAMINATEN AUF OBERFLÄCHEN VON GEGENSTÄNDEN
PROCÉDÉ ET APPAREIL POUR L'APPLICATION D'UN FILM POLYMÈRE ET DE STRATIFIÉS À DES SURFACES D'ARTICLES

(30) Priority: 01.11.2018 US 201862754480 P
(43) Date of publication of application: 28.07.2021
(73) Proprietor: PPG Advanced Surface Technologies, LLC, Columbus, OH 43212 (US)
(72) Inventor: MCGUIRE, JR., James E., Palm Beach, Florida 33480 (US)
(74) Representative: Laufhütte, Dieter
(86) International application number: PCT/US2019/059167
(87) International publication number: WO 2020/092770

(56) References cited:
- CA-A1- 2 277 565
- CN-U- 207 120 968
- CN-U- 207 120 968
- CN-U- 208 021 911
- DE-A1- 19 733 935
- DE-A1- 19 733 935
- ES-A1- 2 537 603
- KR-A- 20180 017 971
- US-A- 3 636 408
- US-A- 4 616 474
- US-A- 4 619 193
- US-A- 5 390 476
- US-A- 5 450 709
- US-A- 5 450 709
- US-A- 5 787 691
- US-A- 5 997 670
- US-A1- 2004 182 050
- US-A1- 2005 000 659
- US-A1- 2007 125 474
- US-A1- 2008 209 859
- US-A1- 2012 042 615
- US-A1- 2013 014 903
- US-A1- 2013 026 120
- US-A1- 2013 061 558
- US-B1- 6 170 233
- US-B1- 6 682 806
- US-B1- 9 648 949

## Description

### BACKGROUND OF THE INVENTION

Application of material to a surface, particularly in bulk processes, often involves use of racks and carts for storage and dispensing of material, particularly when the material is provided in roll form. For example, automotive refinish shops often utilize specialized carts for dispensing masking materials useful in spray painting operations.

Such carts are available, for example, from Innovative Tools & Technologies, Inc. (St. Paul, MN), and can be used for storage of relatively basic and disposable paper and plastic materials - e.g., masking tape. If such masking materials include an adhesive layer, the materials are typically self-wound (*i.e.,* without a separable release liner protecting the adhesive layer.) U.S. Patent No. 10,143,300 describes such exemplary carts.

More specialized polymeric film is becoming increasingly useful in a range of indoor and outdoor applications in, for example, the transportation, architectural and sporting goods industries. It has been found that polymeric films or laminates comprising the same can advantageously be applied to at least a portion of a surface of any article where protection or decoration (*e.g.,* with paint) is desired. Such articles include, for example, motorized vehicles and non-motorized vehicles, amongst a multitude of other applications.

Surfaces on which polymeric films or laminates comprising the same are used can be, for example, painted or unpainted. When a polymeric film or laminate comprising the same is pigmented or otherwise, it can be used itself as "paint in film form" (also referred to as a "paint film applique," "paint replacement film," "paint film," or the like). When a polymeric film or laminate comprising the same is adhered to a surface primarily for the purpose of protecting paint existing on the underlying surface, it is often referred to as a "paint protection film" or the like.

Often polymeric film or laminate comprising the same takes the form of a multi-layer sheet - *e.g.,* one which includes an outwardly exposed adhesive layer for adherence of the polymeric film to a surface of an article. Generally, until its application onto the surface, what would generally be an outwardly exposed adhesive layer in an exemplary multi-layer sheet is covered by a release liner to protect the adhesive layer from becoming contaminated with debris and to facilitate storage and handling of the sheet, which is often provided in roll form. When such a release liner is removed from the adhesive layer so that the sheet can be adhered to the surface, the adhesive layer often accumulates debris that is attracted to that exposed adhesive layer before it is actually applied to the surface. This problem is exacerbated by static charging of the adhesive layer surface during removal of the release liner, which charge arises due to the triboelectric effect and is also referred to as tribocharge.

When applying polymeric film or a laminate comprising the same to articles in a relatively uncontrolled environment - *e.g.,* as opposed to a clean room environment, the triboelectric effect is often intensified and the debris available to be attracted to the adhesive layer is often considerable. For example, when applying polymeric film or laminates comprising the same to marine vessels in open-air boatyards and the like, clean adherence of polymeric film to the surface of the article is often impossible using conventional technology, including racks and carts described above.

The ability to install such films and laminates in a controlled manner is often of great importance, however, in order to maintain a desired or requisite surface finish. More specialized polymeric film and laminates, such as paint in film form and paint protection film described above, are often specifically used for the purpose of creating and/or maintaining certain high-quality surface finishes. Toward that end goal, ways to achieve those surface finishes, such as methods and apparatus for reducing tribocharge during application of polymeric film and laminates comprising the same to a surface of an article, are desired. There exists a particular need for technology, including racks and carts, for adequate storage, handling, and dispensing of adhesive-backed polymeric films and laminates that are supplied with a disposable release liner in multi-layer sheets. Further, there exists a particular need for such technology that is also capable of adequately and efficiently handling release liner scrap that arises during application of such films and laminates onto a surface. Amongst a multitude of others, one reason for the importance of this consideration, for example, is that release liners, having a low coefficient of friction, may present a slipping hazard if they end up on the floor.

While removing and disposing of a release liner from, for example, an adhesive name tag is a relatively trivial process, the removal and disposal process of a release liner from an adhesive layer becomes exponentially more difficult as sheet size increases. The difficulty is particularly pronounced when the sheet is provided in roll form. Using conventional roll storage racks, removal of release liner from large sheets of film and laminate has proven to be quite difficult. A complicating factor is that tables equal to or greater in size than that of the sheet itself must typically be available on which to place a sheet after the desired sheet size has been cut from the roll in order to facilitate application of the sheet to a surface without complications from the unprotected adhesive layer first adhering to itself. The challenging process also typically requires the assistance of multiple installers, increasing labor costs associated with the process.

Further, adequate accommodations are needed to secure a multi-layer sheet in place when removing a release liner from an adhesive layer therein. Also, once a release liner is removed from the adhesive layer within such a sheet, care must be taken in order to ensure that the exposed adhesive surface is not otherwise adversely affected (*e.g.,* by dirt, marring of the adhesive, etc.) As described above, tribocharging that often occurs as a release liner is removed from the adhesive layer of such a sheet makes keeping large surface areas of adhesive free of dirt and debris nearly impossible when dispensing laminates comprising polymeric film for application to a surface of an article. Document DE 197 33 935 A1 discloses an unwind assembly fixture according to the preamble of accompanying claim 1.

### SUMMARY OF THE INVENTION

Unwind assembly fixtures of the invention facilitate improved application of polymeric films and polymeric film laminates to surfaces of articles. Such fixtures are particularly useful for dispensing of multi-layer sheets that include an adhesive layer for adherence of the polymeric film in the form of a polymeric film laminate to an article's surface, wherein such an adhesive layer is protected with a release liner until application of the polymeric film laminate to the surface, at which time the release liner is removed.

According to the invention, such a fixture comprises: first and second longitudinally extending support bars; first and second film holders respectively disposed proximate upper ends of the first and second longitudinally extending support bars; first and second film holder/winder mechanisms respectively disposed proximate lower ends of the first and second longitudinally extending support bars, wherein the second film holder/winder mechanism facilitates unwind of the multi-layer sheet from a roll and the first film holder/winder mechanism facilitates capture and re-rolling of the release liner after its removal from the roll of multi-layer sheet; and an anti-static device positioned approximately parallel to the first and second longitudinally extending support bars and spaced apart from the second support bar on a side opposite the first support bar and proximate a point at which the release liner is removed from the roll of multi-layer sheet during dispensing of the polymeric film laminate for application to the surface of the article.

According to a preferred aspect of this embodiment, the unwind assembly fixture is mounted in a portable manner on a vehicle, such as a mobile lift table. To aid in efficient and effective application of the polymeric film laminate to a surface, such a vehicle can be moved as needed in order to maintain the polymeric film or laminate at the proper height and location with respect to the article for effective and efficient application to a surface of the article.

According to another preferred aspect of this embodiment, at least one of the first and second film holders of the unwind assembly fixture is adjustable. Such adjustability allows for accommodation of rolls of multi-layer sheet having varying core diameters and varying widths of multi-layer sheet.

According to yet another preferred aspect of this embodiment, at least one of the first and second film holder/winder mechanisms utilizes tension control technology to provide controlled dispensing of polymeric film or laminate from the multi-layer sheet. This is accomplished by ensuring that an appropriate tension level occurs as the multi-layer sheet is unwound and the release liner is captured and rewound onto a separate roll after it is removed from the multi-layer sheet.

According to another preferred aspect of this embodiment, the fixture comprises a dispensing mechanism for dispensing of a fluid, steam, or gas onto the exposed adhesive layer of the multi-layer sheet immediately after the release liner is removed therefrom.

Focusing on reduction of tribocharge during application of polymeric film or laminate to a surface of an article, an exemplary unwind assembly fixture comprises: a film holder for mounting of a multi-layer sheet in roll form; and an anti-static device that extends across width of the multi-layer sheet or a portion thereof during unwind of the multi-layer sheet from the roll. According to the invention, the anti-static device comprises an anti-static bar generating an electrical field for electrical contact of the polymeric film or laminate. According to another preferred aspect of this embodiment, the anti-static bar physically contacts the polymeric film or laminate. To accommodate removal of a release liner from a multi-layer sheet, the fixture further comprises a second film holder for capture and re-rolling of release liner after its removal from the multi-layer sheet.

Unwind assembly fixtures of the invention are useful in improved methods for application of polymeric film or laminate to at least a portion of a surface of an article. According to the invention, such a method comprises: providing the first unwind assembly fixture described above; securing the roll of multi-layer sheet between the second film holder and the second film holder/winder mechanism; unwinding the multi-layer sheet from the roll; removing the release liner from the multi-layer sheet after it is unwound from the roll; capturing and re-rolling the removed release liner on a roll positioned between the first film holder/winder mechanism and the first film holder; and applying the polymeric film laminate to the surface of the article.

Using fixtures and methodology of the invention, polymeric film and polymeric film laminates can be more efficiently and effectively applied to a variety of surfaces. In exemplary embodiments, the surfaces are those selected from those on, for example, cargo containers, marine vessels, and land-based passenger vehicles.

### BRIEF DESCRIPTION OF THE SEVERAL VIEWS OF THE DRAWINGS

Fig. 1A is a front right-hand perspective view of an exemplary unwind assembly fixture according to the invention.
Fig. 1B is a front perspective view of the exemplary unwind assembly fixture of Fig. 1A.
Fig. 1C is a back perspective view of the exemplary unwind assembly fixture of Fig. 1A.
Fig. 1D is a left-hand side perspective view of the exemplary unwind assembly fixture of Fig. 1A.
Fig. 1E is a right-hand side perspective view of the exemplary unwind assembly fixture of Fig. 1A.
Fig. 1F is a top perspective view of the exemplary unwind assembly fixture of Fig. 1A.
Fig. 1G is a front left-hand perspective view of the exemplary unwind assembly fixture of Fig. 1A.
Fig. 1H is a back left-hand perspective view of the exemplary unwind assembly fixture of Fig. 1A.
Fig. 1I is a back right-hand perspective view of the exemplary unwind assembly fixture of Fig. 1A.
Fig. 2 is a black-and-white photograph of an exemplary unwind assembly fixture of the invention being used to apply polymeric film to an automobile.
Fig. 3 is a black-and-white photograph of an exemplary unwind assembly fixture of the invention being used to apply polymeric film to a boat hull.

### DETAILED DESCRIPTION OF THE INVENTION

An unwind assembly fixture of the invention is used to unroll multi-layer sheet provided in roll form for application to a surface of an article. In one embodiment, the fixture facilitates not only unroll of the multi-layer sheet, but also removal of at least one layer of material therefrom before application to the surface. Advantageously, amongst other benefits, the unwind assembly fixture enables dispensing and application of the multi-layer sheet with reduced tribocharge in a preferred embodiment. According to such a preferred embodiment, an unwind assembly fixture of the invention comprises a mechanism for mounting of a multi-layer sheet in roll form and an anti-static device extending across the width of the multi-layer sheet or a portion thereof during unwind of the multi-layer sheet from the roll. Although it could be oriented otherwise, the roll of multi-layer sheet is generally suspended vertically on the unwind assembly fixture.

The anti-static device comprises any suitable mechanism for neutralizing charge on the polymeric film or laminate comprising the same that is being applied to the surface of the article. In one embodiment, the anti-static device comprises an anti-static bar that generates an electrical field, causing air molecules in the vicinity of the bar to break down into positive and negative ions. The anti-static device contacts the polymeric film or laminate comprising the same at least electrically, and even physically in some embodiments. Charged material (*i.e.,* tribocharged material) passing near the bar will attract ions of opposite charge until charge on the material is neutralized. In this manner, polymeric film or laminate comprising the same can be applied to the surface of the article without conventional complications associated with tribocharge.

According to another aspect of a preferred embodiment of the invention, the unwind assembly fixture also includes a mechanism for capturing and rolling at least one layer (*e.g.,* release liner) removed from the multi-layer sheet before application of polymeric film or a laminate comprising the same to the surface of the article. When present, such a mechanism is generally suspended in the same orientation - generally vertically - as the orientation of the roll of multi-layer sheet from which the layer is removed.

The unwind assembly fixture can be mounted in a stationary manner on the ground, on a floor, or the like. In an alternative embodiment, the unwind assembly fixture is mounted in a portable manner on a vehicle, such as a truck or a hand cart (*e.g.,* mobile lift table).

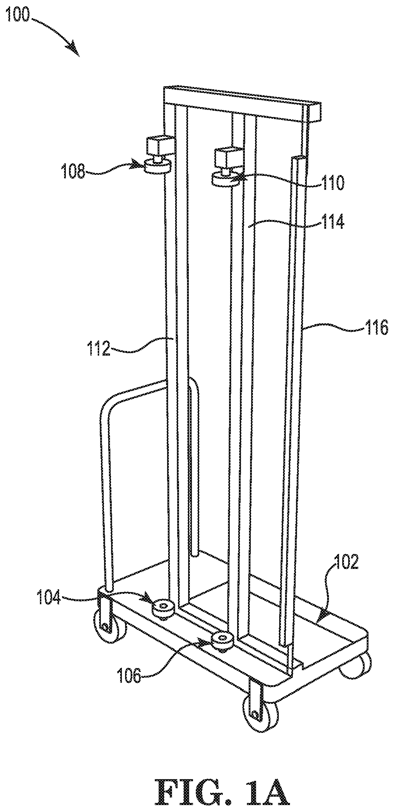

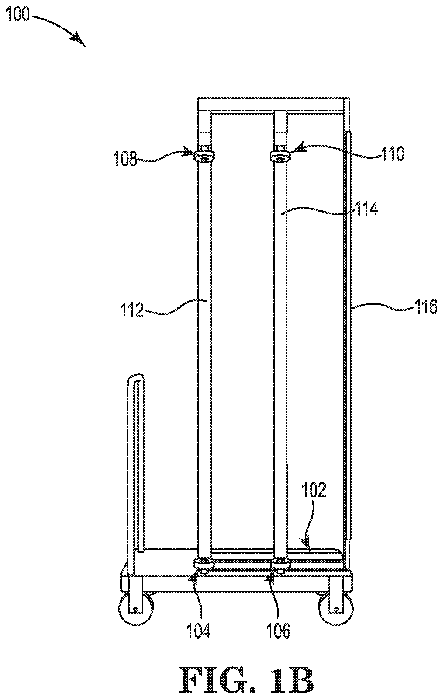

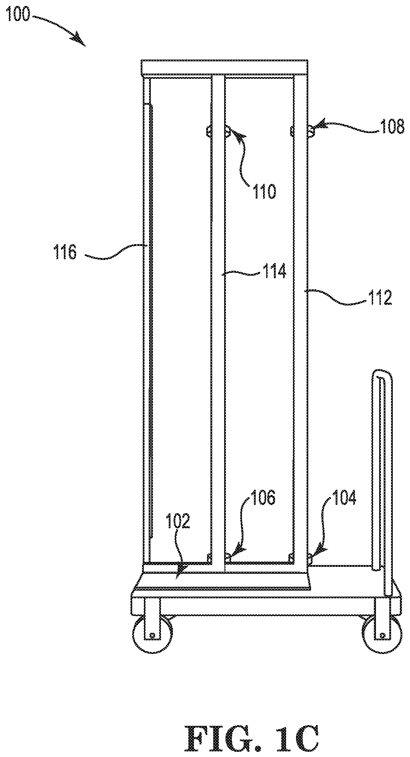

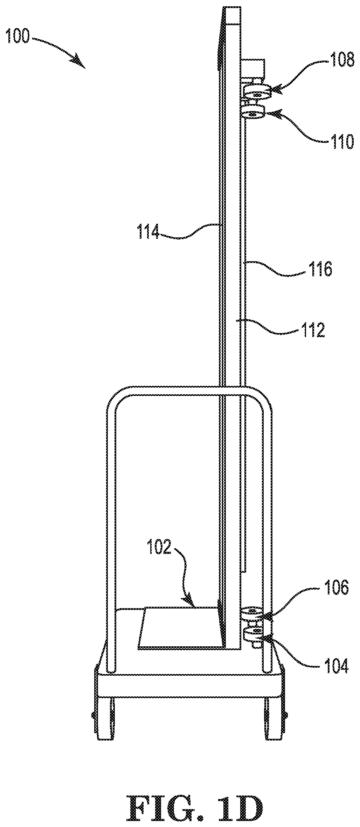

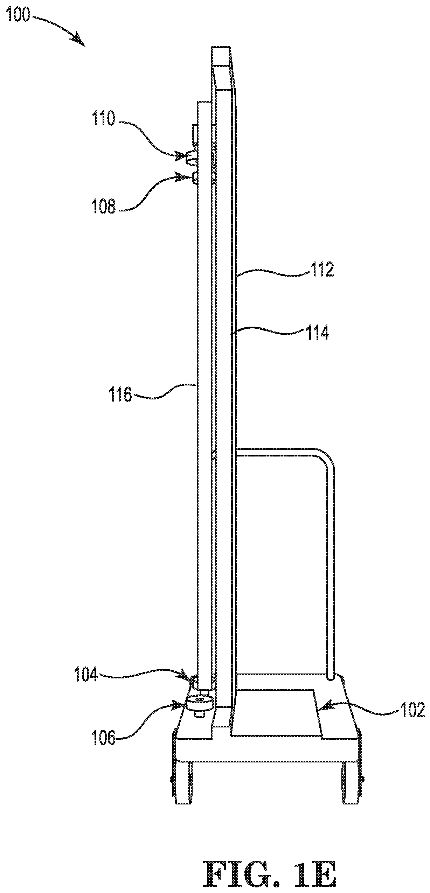

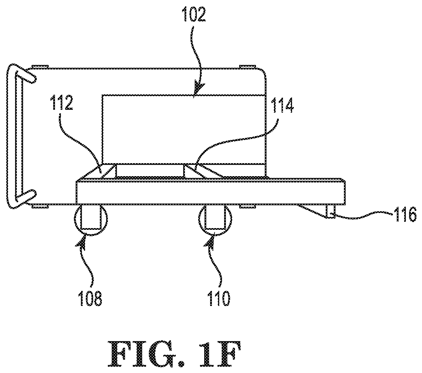

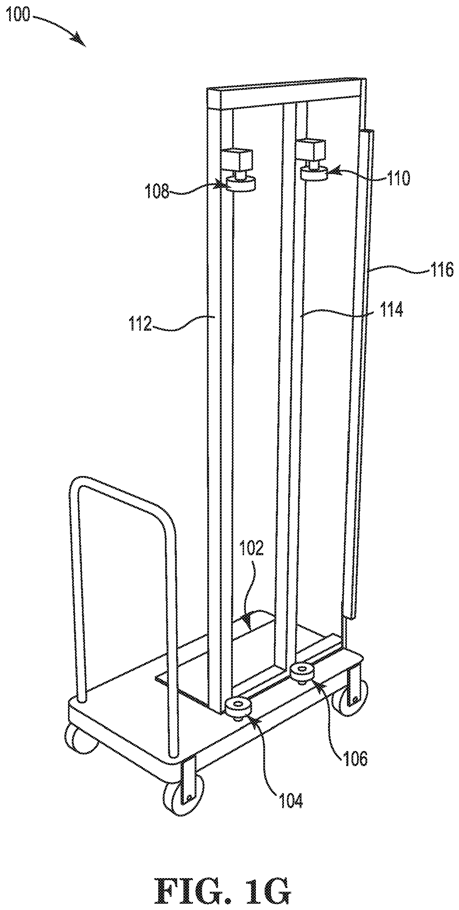

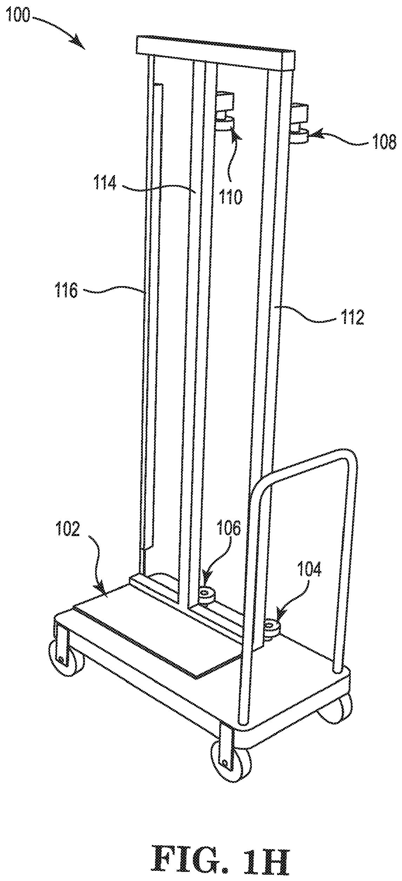

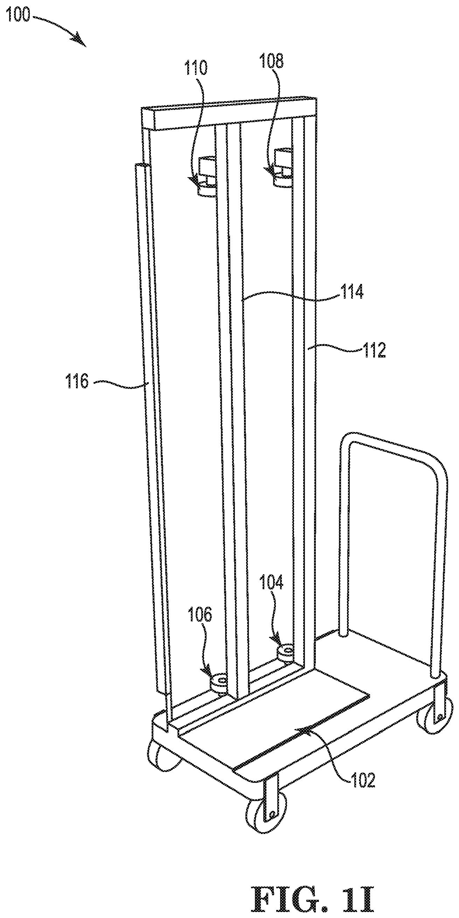

Figs. 1A-1I illustrate an exemplary unwind assembly fixture according to the invention. As detailed in Fig. 1A, the unwind assembly fixture 100 is mounted on a mobile lift table 102 supporting first and second film holder/winder mechanisms 104, 106 that are interposed beneath corresponding first and second film holders 108, 110. At least one of the film holders 108, 110 or the respective film holder/winder mechanisms 104, 106 is preferably vertically adjustable to accommodate different widths of rolls of multi-layer sheet. In an exemplary embodiment, the first and second film holders 108, 110 are vertically adjustable as such and respectively positioned on longitudinally extending first and second support bars 112, 114.

In one embodiment, a rolled multi-layer sheet can be positioned at a desired height for dispensing and application of polymeric film or laminate therefrom onto a surface by using the mobile lift table 102 or any other suitable method for adjusting height as such. According to an exemplary aspect of this embodiment, the unwind assembly fixture is mounted on a mobile lift table that is vertically repositionable a distance of up to about fifteen centimeters. According to a further aspect of this embodiment, the unwind assembly fixture is mounted on a mobile lift table that is vertically repositionable a distance of up to about thirty centimeters. According to yet another aspect of this embodiment, the unwind assembly fixture is mounted on a mobile lift table that is vertically repositionable a distance of up to about sixty centimeters. Advantageously, the ability to adjust the height at which the release liner unwinds from the multi-layer sheet reduces the conventional requirement for additional installers - and, hence, labor costs - otherwise needed to maintain the polymeric film or laminate at the proper height for effective and efficient application to a surface.

According to a further aspect of this embodiment, the mobile lift table is equipped with motorized propulsion that facilitates forward movement of the unwind assembly fixture mounted on the cart as the polymeric film or laminate therefrom is incrementally dispensed behind. Instead of the conventional practice of unwinding an entire length of material required all at once, and hence exposing the adhesive layer to potential debris and other problematic factors, the mobile lift table 102 can be moved forward as application proceeds, simultaneously unwinding (and exposing the adhesive layer on) only a relatively confined amount of material. This is particularly advantageous for application of large sheets (*e.g.,* those where length of the multi-layer sheet is greater than its width, particularly those having a width greater than that of the arm span of a typical installer).

In an exemplary embodiment, the unwind assembly fixture is configured for dispensing and application of sheets having a width of at least sixty centimeters. In a further exemplary embodiment, the unwind assembly fixture is configured for dispensing and application of sheets having a width of at least ninety centimeters. In yet a further exemplary embodiment, the unwind assembly fixture is configured for dispensing and application of sheets having a width of at least one-hundred, twenty centimeters. In still a further exemplary embodiment, the unwind assembly fixture is configured for dispensing and application of sheets having a width of at least one-hundred, fifty centimeters. Rolls of such large sheets can have significant diameters. In one exemplary embodiment, the first film holder is configured for holding the roll of multi-layer sheet, and wherein the roll has a core diameter of at least about eight centimeters. In a further exemplary embodiment, the first film holder is configured for holding the roll of multi-layer sheet, and wherein the roll has a core diameter of at least about sixteen centimeters.

An anti-static device 116 is positioned approximately parallel to the longitudinally extending first and second support bars 112, 114 proximate to the point at which the release liner becomes detached from the multi-layer sheet during dispensing and application of a polymeric film or laminate. In a further embodiment, a dispensing mechanism (*e.g.,* linear manifold containing a plurality of nozzles) is placed approximately parallel to the anti-static device 116 for dispensing of fluid, steam, or gas to the exposed adhesive layer of the multi-layer sheet immediately after the release liner is removed therefrom. Dispensing of such fluid, steam, or gas can facilitate more efficient application of the polymeric film or laminate onto the article's surface.

During use of the unwind assembly fixture 100, a multi-layer sheet is provided in roll form on the second film holder/winder mechanism 106. The second film holder/winder mechanism 106 is equipped with a tension control device that does not allow it to turn until a minimum film tension level is reached thereon. Such a tension control device comprises any suitable mechanism for controlling tension. Pneumatic, electric, and magnetic brakes, and even some motors, for example, are all capable of controlling tension as such. Brakes prevent unintended unrolling of the multi-layer sheet; yet, brakes also provide controlled dispensing of polymeric film or laminate from the sheet by ensuring that an appropriate tension level is achieved.

A first film holder/winder mechanism 104 is located proximate the second film holder/winder mechanism 106 to facilitate capture and re-rolling of removed (*e.g.,* scrap) release liner onto a removal core after its removal from the multi-layer sheet when dispensing the polymeric film or laminate for application to a surface. In an exemplary embodiment, the first film holder/winder mechanism 104 is motor-driven in a tension-controlled manner and comprises any suitable mechanism for controlling tension as such. Pneumatic, electric, and magnetic clutches can be used to limit torque provided by the motor of the first film holder/winder mechanism 104. Alternatively, some motors are capable of controlling tension without requiring use of a clutch. Regardless of the specific mechanism employed, the first film holder/winder mechanism 104 operates to limit tension that can develop in the release liner as it is removed and unwound from the rolled multi-layer sheet that is securely positioned between the second film holder/winder mechanism 106 and the second film holder 110. In one embodiment, tension at which the release liner rewinds onto the removal core (*i.e*., a core that is empty prior to initiation of the unwind for dispensing and application) that is securely positioned between the first film holder 108 and the first film holder/wind mechanism 104 is less than the minimum tension at which primary unwind of the release liner from the multi-layer sheet from the roll securely positioned between the second film holder 110 and the second film holder/wind mechanism 106 is initiated. The differing tension prevents rewind from overpowering primary unwind of the release liner from the multi-layer sheet, which phenomenon can lead to pulling of the entire multi-layer sheet (instead of just the release liner) onto the removal core when dispensing the polymeric film or laminate thereof.

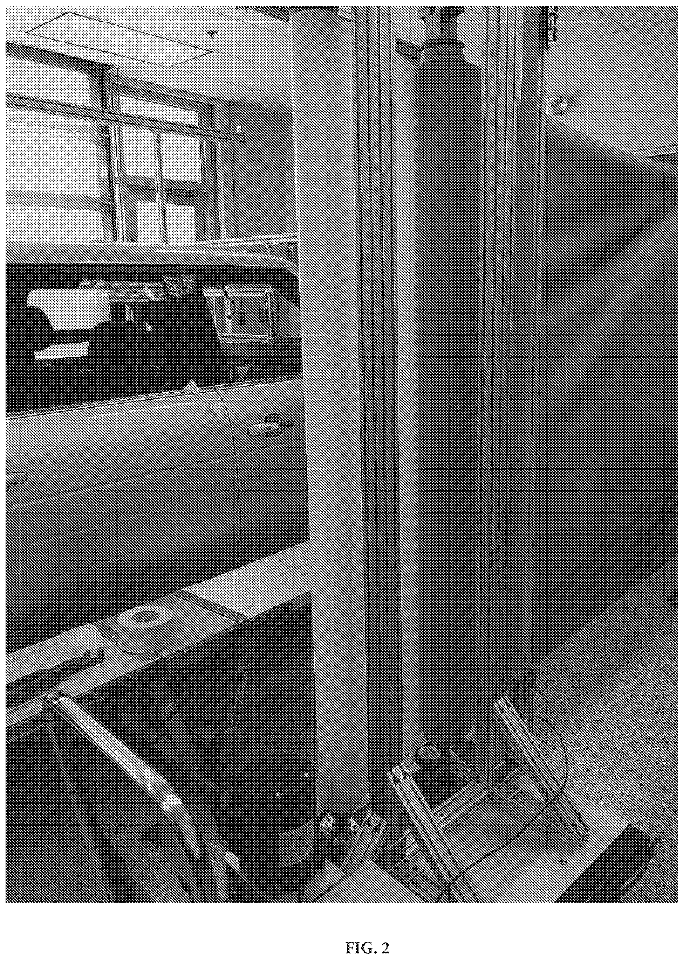

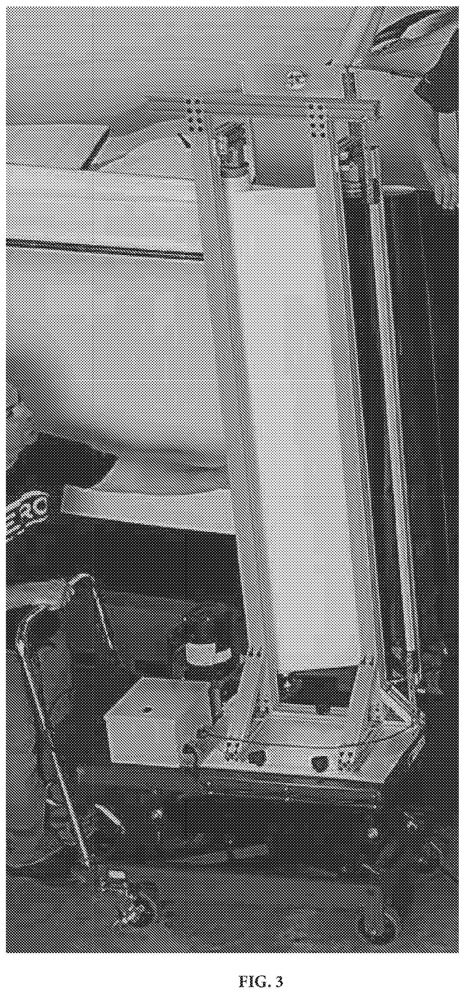

Fig. 2 illustrates use of an unwind assembly fixture according to the invention for application of polymeric film or laminates thereof to an automobile. Fig. 3 illustrates use of an unwind assembly fixture according to the invention for application of polymeric film or laminates thereof to a boat hull. As illustrated therein, a roll of multi-layer sheet is vertically positioned between a film holder/winder mechanism and a corresponding film holder proximate a support bar. As the multi-layer sheet is unwound from its roll by an installer, a release liner is separated from the polymeric film or laminate thereof and wound onto a roll vertically positioned between the other film holder/winder mechanism and its corresponding film holder proximate another support bar. During the unwind from one roll and simultaneous wind of the release liner onto another roll, the multi-layer sheet passes by an anti-static device, which anti-static device electrically and physically contacts the multi-layer sheet across its vertical width in the embodiment illustrated. In an alternative embodiment, the anti-static device electrically and physically contacts the polymeric film across its vertical width after removal of the release liner from a multi-layer sheet comprising the polymeric film.

Unwind assembly fixtures of the invention and associated methods can be used to apply polymeric film or laminates comprising the same to a wide variety of articles. Applications are numerous and widespread. In an exemplary embodiment, the article to which the multi-layer sheet is applied is a cargo container. In another exemplary embodiment, the article to which the multi-layer sheet is applied is a marine vessel, particularly the hull thereof, such as a boat hull. In yet another exemplary embodiment, the article to which the multi-layer sheet is applied is a land-based passenger vehicle, such as an automobile. Not only do unwind assembly fixtures of the invention facilitate controlled removal of the release liner and mitigate negative effects from tribocharging issues during application of polymeric film and laminates, they also facilitate improved installation on surfaces of articles and can reduce the number of installers needed for application of large sheets (*e.g.,* those where length of the multi-layer sheet is greater than its width, particularly those having a width greater than that of the arm span of a typical installer) comprising the polymeric film or laminates thereof.

Various modifications and alterations of the invention will become apparent to those skilled in the art without departing from the scope of the invention, which is defined by the accompanying claims. It should be noted that steps recited in any method claims below do not necessarily need to be performed in the order that they are recited unless expressly stated otherwise. Those of ordinary skill in the art will recognize variations in performing the steps from the order in which they are recited. In addition, the lack of mention or discussion of a feature, step, or component provides the basis for claims where the absent feature or component is excluded by way of a proviso or similar claim language.

Further, as used throughout, ranges may be used as shorthand for describing each and every value that is within the range. Any value within the range can be selected as the terminus of the range. Similarly, any discrete value within the range can be selected as the minimum or maximum value recited in describing and claiming features of the invention.

## Claims

1. An unwind assembly fixture (100) useful for application of a polymeric film laminate to a surface of an article after removal of a release liner from a roll of multi-layer sheet comprising the polymeric film laminate, the fixture comprising:
first and second longitudinally extending support bars (112, 114);
first and second film holders (108, 110) respectively disposed proximate upper ends of the first and second longitudinally extending support bars (112, 114);
first and second film holder/winder mechanisms (104, 106) respectively disposed proximate lower ends of the first and second longitudinally extending support bars (112, 114), wherein the second film holder/winder mechanism (106) facilitates unwind of the multi-layer sheet from a roll and the first film holder/winder mechanism (104) facilitates capture and re-rolling of the release liner after its removal from the roll of multi-layer sheet; **characterized in that** it further comprises:
an anti-static bar (116) generating an electrical field for electrical contact of the polymeric film or laminate and positioned approximately parallel to the first and second longitudinally extending support bars (112, 114) and spaced apart from the second support bar (114) on a side opposite the first support bar (112) and proximate a point at which the release liner is removed from the roll of multi-layer sheet during dispensing of the polymeric film laminate for application to the surface of the article.

2. The unwind assembly fixture (100) of claim 1, wherein the fixture (100) is mounted in a portable manner on a vehicle.

3. The unwind assembly fixture (100) of claim 2, wherein the vehicle is equipped with motorized propulsion to facilitate forward movement of the unwind assembly fixture (100) as the polymeric film or laminate therefrom is incrementally dispensed behind.

4. The unwind assembly fixture (100) of any one of the preceding claims, wherein at least one of the first and second film holders (108, 110) is vertically adjustable.

5. The unwind assembly fixture (100) of any one of the preceding claims, wherein the second film holder (110) is configured for holding the roll of multi- layer sheet, and wherein the roll has a core diameter of at least about eight centimeters.

6. The unwind assembly fixture (100) of any one of the preceding claims, wherein at least one of the first and second film holder/winder mechanisms (104, 106) employs a brake for tension control.

7. The unwind assembly fixture (100) of any one of the preceding claims, further comprising a dispensing mechanism for dispensing of a fluid, steam, or gas onto an exposed adhesive layer of the multi-layer sheet immediately after the release liner is removed therefrom.

8. A method for application of polymeric film or laminate to at least a portion of a surface of an article, the method comprising:
providing the unwind assembly fixture (100) of claim 1;
securing the roll of multi-layer sheet between the second film holder (110) and the second film holder/winder mechanism (106);
unwinding the multi-layer sheet from the roll;
removing the release liner from the multi-layer sheet after it is unwound from the roll;
capturing and re-rolling the removed release liner on a roll positioned between the first film holder/winder mechanism (104) and the first film holder (108); and
applying the polymeric film laminate to the surface of the article.

9. The method of claim 8, wherein the article comprises a cargo container, a marine vessel, or a land-based passenger vehicle.

## Patentansprüche

1. Abwickelanordnungsvorrichtung (100), die zur Aufbringung eines Polymerfolienlaminats auf eine Oberfläche eines Gegenstands nach dem Entfernen einer Trennschicht von einer Rolle einer mehrschichtigen Folie, umfassend das Polymerfolienlaminat, nützlich ist, wobei die Vorrichtung Folgendes umfasst:
erste und zweite sich in Längsrichtung erstreckende Stützstäbe (112, 114);
erste und zweite Folienhalter (108, 110), die jeweils in der Nähe der oberen Enden der ersten und zweiten sich in Längsrichtung erstreckenden Stützstäbe (112, 114) angebracht sind;
einen ersten und zweiten Folienhalter-/Aufwickelmechanismus (104, 106), die jeweils in der Nähe der unteren Enden der ersten und zweiten sich in Längsrichtung erstreckenden Stützstäbe (112, 114) angebracht sind, wobei der zweite Folienhalter-/Aufwickelmechanismus (106) das Abwickeln der mehrschichtigen Folie von einer Rolle erleichtert und der erste Folienhalter-/Aufwickelmechanismus (104) das Einfangen und Rückrollen der Trennschicht nach ihrer Entfernung von der Rolle einer mehrschichtigen Folie erleichtert; **dadurch gekennzeichnet, dass** sie ferner Folgendes umfasst:
einen antistatischen Stab (116), der ein elektrisches Feld für den elektrischen Kontakt der Polymerfolie oder des Laminats erzeugt und ungefähr parallel zu den ersten und zweiten sich in Längsrichtung erstreckenden Stützstäben (112, 114) und beabstandet von dem zweiten Stützstab (114) auf einer Seite gegenüber dem ersten Stützstab (112) und in der Nähe eines Punktes positioniert ist, an dem die Trennschicht von der Rolle einer mehrschichtigen Folie während dem Abgeben des Polymerfolienlaminats zur Aufbringung auf die Oberfläche des Gegenstands entfernt wird.

2. Abwickelanordnungsvorrichtung (100) nach Anspruch 1, wobei die Vorrichtung (100) auf tragbare Weise an einem Fahrzeug montiert ist.

3. Abwickelanordnungsvorrichtung (100) nach Anspruch 2, wobei das Fahrzeug mit einem motorisierten Antrieb ausgestattet ist, um die Vorwärtsbewegung der Abwickelanordnungsvorrichtung (100) zu erleichtern, während die Polymerfolie oder das Laminat schrittweise von hinten abgegeben wird.

4. Abwickelanordnungsvorrichtung (100) nach einem der vorhergehenden Ansprüche, wobei mindestens einer der ersten und zweiten Folienhalter (108, 110) vertikal einstellbar ist.

5. Abwickelanordnungsvorrichtung (100) nach einem der vorhergehenden Ansprüche, wobei der zweite Folienhalter (110) so konfiguriert ist, dass er die Rolle einer mehrschichtigen Folie hält, und wobei die Rolle einen Kerndurchmesser von mindestens etwa acht Zentimetern aufweist.

6. Abwickelanordnungsvorrichtung (100) nach einem der vorhergehenden Ansprüche, wobei mindestens einer der ersten und zweiten Folienhalter- /Aufwickelmechanismen (104, 106) eine Bremse zur Spannungssteuerung verwendet.

7. Abwickelanordnungsvorrichtung (100) nach einem der vorhergehenden Ansprüche, ferner umfassend einen Abgabemechanismus zum Abgeben eines Fluids, Dampfes oder Gases auf eine freiliegende Klebeschicht der mehrschichtigen Folie unmittelbar nach dem Entfernen der Trennschicht von dieser.

8. Verfahren zur Aufbringung einer Polymerfolie oder eines Laminats auf mindestens einen Abschnitt einer Oberfläche eines Gegenstands, wobei das Verfahren Folgendes umfasst:
Bereitstellen der Abwickelanordnungsvorrichtung (100) nach Anspruch 1;
Sichern der Rolle einer mehrschichtigen Folie zwischen dem zweiten Folienhalter (110) und dem zweiten Folienhalter/Abwickelmechanismus (106);
Abwickeln der mehrschichtigen Folie von der Rolle;
Entfernen der Trennschicht von der mehrschichtigen Folie, nachdem diese von der Rolle abgewickelt wurde;
Einfangen und Rückrollen der entfernten Trennschicht auf eine Rolle, die zwischen dem ersten Filmhalter/Abwickelmechanismus (104) und dem ersten Folienhalter (108) positioniert ist; und
Aufbringen des Polymerfolienlaminats auf die Oberfläche des Gegenstands.

9. Verfahren nach Anspruch 8, wobei der Gegenstand einen Frachtcontainer, ein Seeschiff oder ein landgestütztes Personenfahrzeug umfasst.

## Revendications

1. Appareil (100) d'ensemble dérouleur permettant l'application d'un stratifié de film polymère à une surface d'un article après le retrait d'un revêtement détachable à partir d'un rouleau de feuille multicouche comprenant le stratifié de film polymère, l'appareil comprenant :
des première et seconde barres de support (112, 114) s'étendant longitudinalement ;
des premier et second dispositifs (108, 110) de retenue de film disposés respectivement à proximité des extrémités supérieures des première et seconde barres de support (112, 114) s'étendant longitudinalement ;
des premier et second mécanismes (104, 106) de retenue/enroulement de film disposés respectivement à proximité des extrémités inférieures des première et seconde barres de support (112, 114) s'étendant longitudinalement, le second mécanisme (106) de retenue/enroulement de film facilitant le déroulement de la feuille multicouche à partir d'un rouleau, et le premier mécanisme (104) de retenue/enroulement de film facilitant la capture et le re-roulement du revêtement détachable après son retrait du rouleau de feuille multicouche ; **caractérisé en ce qu'**il comprend en outre :
une barre antistatique (116) produisant un champ électrique permettant le contact électrique du film polymère ou du stratifié et positionnée approximativement parallèle aux première et seconde barres de support (112, 114) s'étendant longitudinalement, et espacée de la seconde barre de support (114) sur un côté opposé à la première barre de support (112) et à proximité d'un point au niveau duquel le revêtement détachable est retiré du rouleau de feuille multicouche pendant la distribution du stratifié de film polymère pour son application à la surface de l'article.

2. L'appareil (100) d'ensemble dérouleur de la revendication 1, dans lequel l'appareil (100) est monté de manière portative sur un véhicule.

3. L'appareil (100) d'ensemble dérouleur de la revendication 2, dans lequel le véhicule est doté d'une propulsion à moteur afin de faciliter le déplacement vers l'avant de l'appareil (100) d'ensemble dérouleur à mesure que le film polymère, ou son stratifié, est distribué progressivement à l'arrière.

4. L'appareil (100) d'ensemble dérouleur de l'une quelconque des revendications précédentes, dans lequel au moins un dispositif, parmi les premier et second dispositifs (108, 110) de retenue de film, peut être réglé verticalement.

5. L'appareil (100) d'ensemble dérouleur de l'une quelconque des revendications précédentes, dans lequel le second dispositif (110) de retenue de film est conçu pour tenir le rouleau de feuille multicouche, et dans lequel le rouleau présente un diamètre de mandrin d'au moins environ huit centimètres.

6. L'appareil (100) d'ensemble dérouleur de l'une quelconque des revendications précédentes, dans lequel au moins un mécanisme, parmi les premier et second mécanismes (104, 106) de retenue/enroulement de film, utilise un frein pour réguler la tension.

7. L'appareil (100) d'ensemble dérouleur de l'une quelconque des revendications précédentes, comprenant en outre un mécanisme distributeur permettant de distribuer du fluide, de la vapeur ou du gaz sur une couche adhésive exposée de la feuille multicouche, immédiatement après le retrait du revêtement détachable à partir de ladite feuille.

8. Procédé d'application d'un film polymère ou d'un stratifié à au moins une partie d'une surface d'un article, le procédé comprenant :
l'utilisation de l'appareil (100) d'ensemble dérouleur de la revendication 1 ;
la fixation du rouleau de feuille multicouche entre le second dispositif (110) de retenue de film et le second mécanisme (106) de retenue/enroulement de film ;
le déroulement de la feuille multicouche à partir du rouleau ;
le retrait du revêtement détachable à partir de la feuille multicouche après son déroulement à partir du rouleau ;
la capture et le re-enroulement du revêtement détachable retiré, sur un rouleau positionné entre le premier mécanisme (104) de retenue/enroulement de film et le premier dispositif (108) de retenue de film ; et
l'application du stratifié de film polymère à la surface de l'article.

9. Le procédé de la revendication 8, dans lequel l'article comprend un conteneur, un navire maritime ou un véhicule terrestre à passagers.
